# EUROPEAN PATENT SPECIFICATION

(11) **EP 2 690 778 B1**
(45) Date of publication and mention of the grant of the patent: **03.05.2017**
(21) Application number: 12768245.8
(22) Date of filing: 16.03.2012
(51) Int. Cl.: H02P 27/06, H02M 7/48, H02P 29/00, H02P 1/02, H02P 1/16, H02P 27/08

(54) **INVERTER DEVICE**
UMRICHTERVORRICHTUNG
DISPOSITIF ONDULEUR

(30) Priority: 07.04.2011 JP 2011085176
(43) Date of publication of application: 29.01.2014
(73) Proprietor: Sanden Holdings Corporation, Gunma 372-8502 (JP)
(72) Inventor: TSUKAMOTO, Takeo, Isesaki-shi Gunma 372-8502 (JP); HIRONO, Daisuke, Isesaki-shi Gunma 372-8502 (JP)
(74) Representative: Prüfer & Partner mbB Patentanwälte · Rechtsanwälte
(86) International application number: PCT/JP2012/056915
(87) International publication number: WO 2012/137587

(56) References cited:
- EP-A2- 2 028 759
- JP-A- 2006 109 624
- JP-A- 2009 060 776
- JP-A- 2009 060 776
- JP-A- 2009 189 181
- JP-A- 2011 010 534
- US-A1- 2009 279 337

## Description

### TECHNICAL FIELD

The present invention relates to an inverter device that generates an alternating voltage from a direct voltage smoothed by an electrolytic capacitor, to drive an electric motor, and more specifically, the present invention relates to an inverter device that enables an electrolytic capacitor to be used even in a lower-temperature environment.

### BACKGROUND ART

Conventionally, such an inverter device selectively drives three switching elements on an upper-phase side and three switching elements on a lower-phase side of an inverter circuit, to generate three-phase voltages of U, V and W from a direct voltage, to thereby drive an electric motor, and includes a smoothing capacitor that smoothes the direct voltage of a power source of an inverter circuit (see, Patent Document 1, for example). In this case, as the smoothing capacitor, an electrolytic capacitor, a film capacitor, or the like, may be used.

### CITATION LIST

### PATENT DOCUMENT

Patent Document 1: Japanese Laid-open Patent Application Publication No. 2009-138521

### PROBLEMS TO BE SOLVED BY THE INVENTION

However, such a conventional inverter device, especially, an inverter device mounted on a vehicle, may be used in a lower-temperature environment in some cases. When the electrolytic capacitor is used in such an environment, equivalent series resistance of the electrolytic capacitor may increase, to increase a ripple voltage, and accordingly, a voltage supplied to the switching elements and the electrolytic capacitor might exceed withstand voltages thereof or might become inverse voltages, and thus, there may be a case in which an electric motor, such as a motor compressor, or the like, cannot be operated.

Therefore, as the inverter device used in the lower-temperature environment, it is required to use a large film capacitor with extremely low equivalent series resistance as the smoothing capacitor. However, there have been problems that the large film capacitor is expensive, the inverter device might become large, and production costs might be increased.

EP 2 028 759 A2 discloses an inverter in accordance to the preamble of claim 1.

Thus, in view of the above problems, it is an object of the present invention to provide under reduced production costs a downsized inverter device which includes an electrolytic capacitor.

### MEANS FOR SOLVING THE PROBLEMS

In order to achieve the object, the inverter device according to an aspect of the present invention includes: an electrolytic capacitor that smoothes a rectified voltage to a direct voltage; an inverter circuit that generates an alternating voltage from the direct voltage, to drive an electric motor; a controlling device that controls drive of a plurality of switching elements included in the inverter circuit; and a temperature measuring device that measures a temperature of the electrolytic capacitor, to output the measured temperature to the controlling device, in which, when the temperature obtained by the temperature measuring device is lower than a predetermined target temperature, the controlling device supplies the electric motor with a current which is restricted so that a ripple voltage generated when the rectified voltage is smoothened to the direct voltage falls within an allowable range, before starting a normal operation of the electric motor, so that the temperature of the electrolytic capacitor is raised to the target temperature.

By such a configuration, the temperature of the electrolytic capacitor that smoothes the rectified voltage to the direct voltage is obtained by the temperature measuring device, and when the obtained temperature is lower than the predetermined target temperature, the controlling device controls the drive of the plurality of switching elements included in the inverter circuit before starting a normal operation of the electric motor, to supply the electric motor with the current which is restricted so that the ripple voltage of the direct voltage falls within the allowable range, thereby raising the temperature of the electrolytic capacitor to the target temperature.

In this case, before starting up the electric motor, the controlling device may select particular switching elements from the plurality of switching elements of the inverter circuit, to drive the particular switching element to be ON, to thereby enable the electric motor to be supplied with the current, while the controlling device may control the current supplied to the electric motor based on a set current value which is capable of suppressing the ripple voltage of the direct voltage within the allowable range.

Alternatively, until a certain time elapses after starting up the electric motor, the controlling device may control the current supplied to the electric motor based on a constant set current value which is capable of restricting the ripple voltage of the direct voltage within the allowable range or a variable set current value which varies to correlate with the temperature of the electrolytic capacitor..

Alternatively, until a certain time elapses after starting up the electric motor, the controlling device may control the current supplied to the electric motor based on a constant set revolution number which is capable of restricting the ripple voltage of the direct voltage within the allowable range or a variable set revolution number which varies to correlate with the temperature of the electrolytic capacitor.

Furthermore, until a certain time elapses after starting up the electric motor, the controlling device may control the current supplied to the electric motor based on a constant pulse width modulation carrier frequency which is capable of restricting the ripple voltage of the direct voltage within the allowable range or a variable pulse width modulation carrier frequency which varies to correlate with the temperature of the electrolytic capacitor.

### EFFECT OF THE INVENTION

According to the first aspect of the present invention, since the electric motor, in the lower-temperature environment, is supplied with the current before starting the normal operation of the electric motor, to execute a warm-up mode, in which the temperature of the electrolytic capacitor is raised to a temperature at which the normal operation of the electric motor can be started, troubles of defects of the switching elements and the electrolytic capacitor caused by being supplied with voltages exceeding the withstand voltages thereof due to the large ripple voltage, can be prevented. Thus, even in the lower-temperature environment, a low-cost and small electrolytic capacitor can be used, and thus, downsizing of the inverter device can be possible, and reduction of the production costs can also be possible. In this case, since the warm-up mode is executed by supplying the electric motor with the current which is restricted so that the ripple voltage of the direct voltage which is a power source voltage of the inverter circuit falls within the allowable range, defects of the switching elements and the electrolytic capacitor can also be prevented even in the warm-up mode.

Furthermore, according to the second aspect of the present invention, the warm-up mode can be executed by driving the particular switching elements of the inverter circuit to be ON before starting up the electric motor. In this case, since the supplied current to the electric motor is controlled based on the set current value which is capable of suppressing the ripple voltage of the direct voltage within the allowable range, the switching elements and the electrolytic capacitor can be surely prevented from being supplied with a voltage exceeding the withstand voltages thereof.

Still further, according to the third aspect of the present invention, the warm-up mode can be executed until the certain time elapses after starting up the electric motor. Thus, transition to the normal operation of the electric motor can be facilitated. In this case, since the supplied current to the electric motor is controlled based on the constant set current value which is capable of restricting the ripple voltage of the direct voltage within the allowable range or the variable set current value which varies to correlate with the temperature of the electrolytic capacitor, the switching elements and the electrolytic capacitor, also in this case, can be surely prevented from being supplied with voltages exceeding the withstand voltages thereof.

Yet further, according to the fourth aspect of the present invention, the warm-up mode can be executed until the certain time elapses after starting up the electric motor. Thus, transition to the normal operation of the electric motor can be facilitated. In this case, since the supplied current to the electric motor is controlled based on the constant set revolution number which is capable of restricting the ripple voltage of the direct voltage within the allowable range or the variable set revolution number which varies to correlate with the temperature of the electrolytic capacitor, the switching elements and the electrolytic capacitor, also in this case, can be surely prevented from being supplied with voltages exceeding the withstand voltages thereof.

In addition, according to the fifth aspect of the present invention, the warm-up mode can be executed until the certain time elapses after starting up the electric motor. Thus, transition to the normal operation of the electric motor can be facilitated. In this case, since the supplied current to the electric motor is controlled based on the constant pulse width modulation carrier frequency which is capable of restricting the ripple voltage of the direct voltage within the allowable range or the variable pulse width modulation carrier frequency which varies to correlate with the temperature of the electrolytic capacitor, the switching elements and the electrolytic capacitor, also in this case, can be surely prevented from being supplied with voltages exceeding the withstand voltages thereof.

### BRIEF DESCRIPTION OF THE DRAWINGS

FIG. 1 is a circuit diagram illustrating a schematic constitution of an inverter device according to a first embodiment of the present invention;
FIG. 2 is a block diagram illustrating a control circuit of a warm-up mode in a controlling device according to the first embodiment;
FIG. 3 is a flowchart illustrating operation of the warm-up mode according to the first embodiment;
FIG. 4 is an explanatory view illustrating an energization state in the warm-up mode according to the first embodiment;
FIG. 5 is a flowchart illustrating another operation of warm-up mode according to the first embodiment;
FIG. 6 is a graph illustrating the relationship between an energized time, and a temperature and equivalent series resistance of an electrolytic capacitor, in the warm-up mode;
FIG. 7 is a block diagram illustrating a controlling device of an inverter device according to a second embodiment of the present invention;
FIG. 8 is a flowchart illustrating operation of a warm-up mode according to the second embodiment;
FIG. 9 is a flowchart illustrating another operation of warm-up mode according to the second embodiment; and
FIG. 10 is a flowchart illustrating another operation of warm-up mode according to the second embodiment.

### MODE FOR CARRYING OUT THE INVENTION

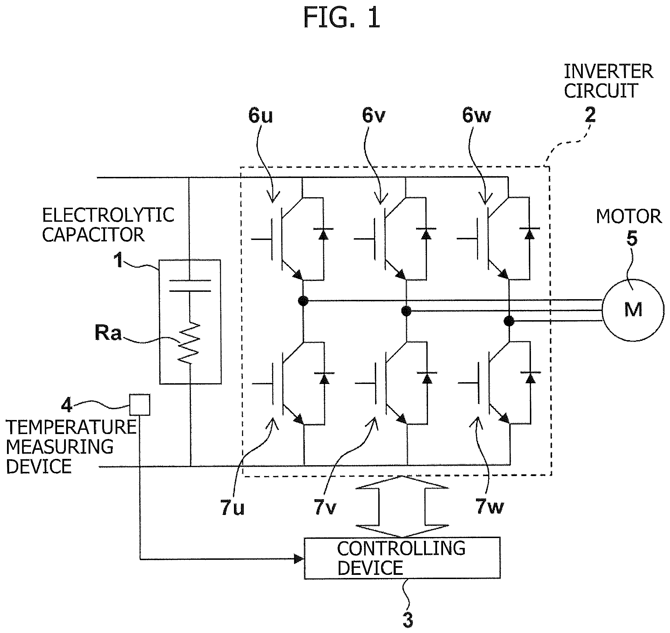

Hereunder, embodiments of the present invention will be described in detail with reference to the accompanying drawings. FIG. 1 is a circuit diagram illustrating a schematic constitution of an inverter device according to a first embodiment of the present invention. This inverter device generates an alternating voltage from a direct voltage which is smoothed by an electrolytic capacitor, to drive an electric motor, and the inverter device includes an electrolytic capacitor 1, an inverter circuit 2, a controlling device 3, and a temperature measuring device 4.

The electrolytic capacitor 1 smoothes a rectified voltage to the direct voltage, and is an aluminum electrolytic capacitor with a large capacitance. Although such an aluminum electrolytic capacitor is compact and inexpensive, equivalent series resistance Ra thereof is generally large since resistance of electrolyte, resistance of an electrolytic paper, and the like, are included therein, and such an aluminum electrolytic capacitor has a feature that the equivalent series resistance Ra increases in the lower-temperature environment.

The inverter circuit 2 is disposed so that the direct voltage smoothed by the electrolytic capacitor 1 is supplied as a power source voltage. This inverter circuit 2 generates three-phase voltages Vu, Vv, Vw from the direct voltage, to supply these voltages to a three-phase brushless motor 5 (hereinafter, referred to as "motor"), as an electric motor, and the inverter circuit 2 includes three upper-phase side switching elements (IGBT) 6u, 6v, 6w and three lower-phase side switching elements (IGBT) 7u, 7v, 7w, for example.

The controlling device 3 is disposed in a state being connected to the inverter circuit 2. This controlling device 3 controls ON- and OFF-drives of six switching elements 6u-6w, 7u-7w of the inverter circuit 2, to appropriately operate a motor 5. When the temperature of the electrolytic capacitor 1 is lower than a predetermined target temperature, the controlling device 3 controls, before starting a normal operation of the motor 5, a duty cycle of a pulse width modulation (hereinafter, referred to as "PWM") signal which drives each of the switching elements 6u-6w, 7u-7w of the inverter circuit 2 to be ON and OFF, to thereby supply the motor 5 with a current which is restricted so that a ripple voltage of the direct voltage falls within an allowable range, and thus, a warm-up mode in which the temperature of the electrolytic capacitor 1 is raised to the target temperature by Joule heat generated in the equivalent series resistance Ra of the electrolytic capacitor 1, can be executed.

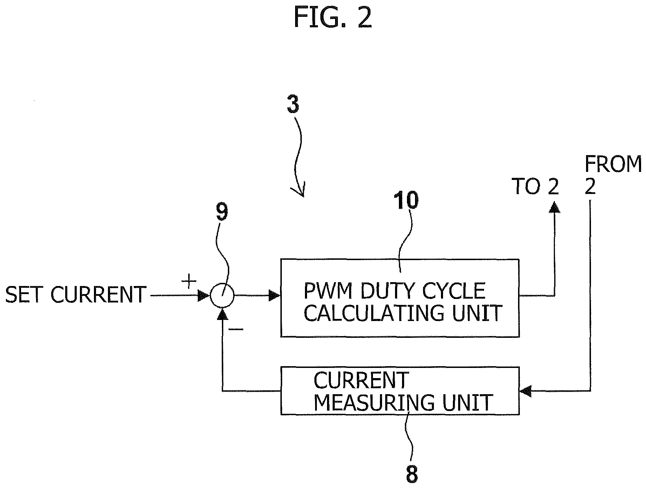

FIG. 2 is a block diagram illustrating a control circuit of the warm-up mode in the controlling device 3. As illustrated in FIG. 2, the control circuit of the warm-up mode includes: a current measuring unit 8 that measures a supplied current to the motor 5 based on a current passing through a shunt resistor (not illustrated) connected to an emitter of the lower-phase side switching elements 7u-7w of the inverter circuit 2, or a shunt resistor (not illustrated) disposed on an earth line of the inverter circuit 2; a comparator 9 that compares a current value measured by the current measuring unit 8 with a constant set current value (hereinafter, referred to as "warm-up mode current value") which is capable of suppressing the ripple voltage of the direct voltage within the allowable range; and a PWM duty cycle calculating unit 10 that calculates a duty cycle of the PWM signal so that a difference between the supplied current value and the warm-up mode current value can be corrected.

The controlling device 3 having such a configuration executes the warm-up mode before starting up the motor 5, when the temperature of the electrolytic capacitor 1 is lower than the target temperature. That is, among the three upper-phase side switching elements 6u-6w of the inverter circuit 2, the switching element 6u, for example, is selected and driven to be ON, and the remaining switching elements 6v, 6w are selected and driven to be OFF, while among the three lower-phase side switching elements 7u-7w, the switching elements 7v, 7w are selected and driven to be ON, and the remaining switching element 7u is selected and driven to be OFF. At the same time, the current measuring unit 8 measures the supplied current to the motor 5, the comparator 9 compares the measured current value with the warm-up mode current value, and the PWM duty cycle calculating unit 10 calculates the duty cycle of the PWM signal so that the difference obtained by the comparison can be corrected. Thus, the switching elements 6u, 7v, 7w are driven to be ON by the PWM signal with the calculated duty cycle, to energize the motor 5. Accordingly, via the inverter circuit 2, the motor 5 is supplied with the current which is restricted so that the ripple voltage of the direct voltage falls within the allowable range. In addition, during the energization of the motor 5, the temperature of the electrolytic capacitor 1 is raised by the Joule heat generated in the equivalent series resistance Ra.

In the vicinity of the electrolytic capacitor 1, the temperature measuring device 4 is disposed. This temperature measuring device 4 measures an ambient temperature of the electrolytic capacitor 1, to output the temperature to the controlling device 3, and the temperature measuring device 4 may be various temperature sensor, such as a thermocouple, a resistance sensor, or the like. When the electrolytic capacitor 1 is mounted on the same substrate on which the inverter circuit 2 is mounted, or placed in the same space, the temperature measuring device 4 may be disposed so that a temperature in the vicinity of the switching elements of the inverter circuit 2, which generate the greatest heat, is measured, to estimate the temperature of the electrolytic capacitor 1 by the measured temperature. However, hereunder, a case in which the temperature measuring device 4 measures the ambient temperature of the electrolytic capacitor 1 and estimates this temperature as a temperature of the electrolytic capacitor 1 will be described.

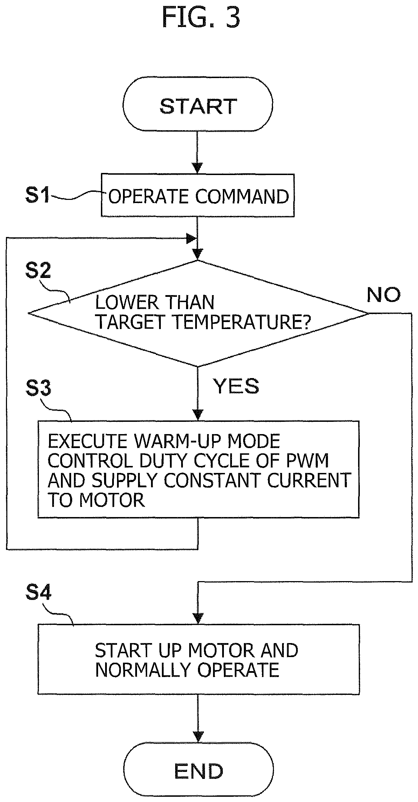

Next, operation of the warm-up mode according to the first embodiment having such a configuration will be described with reference to a flowchart of FIG. 3.

First, in step S1, when an operation switch is turned on (an operate command), a power source voltage is supplied to the inverter device, to start up the controlling device 3 of the inverter device.

Next, in step S2, the ambient temperature of the electrolytic capacitor 1 is measured by the temperature measuring device 4, and the measured output is sent to the controlling device 3. In a deciding unit (not illustrated) of the controlling device 3, the measured temperature obtained by the temperature measuring device 4 is estimated as the temperature of the electrolytic capacitor 1, and compared with a target temperature which is set in advance and stored in a memory (not illustrated) for performing a decision as to whether or not operation of warm-up mode is executed. Here, when the measured temperature is lower than the target temperature, it is decided to be YES in step S2, and the operation proceeds to step S3.

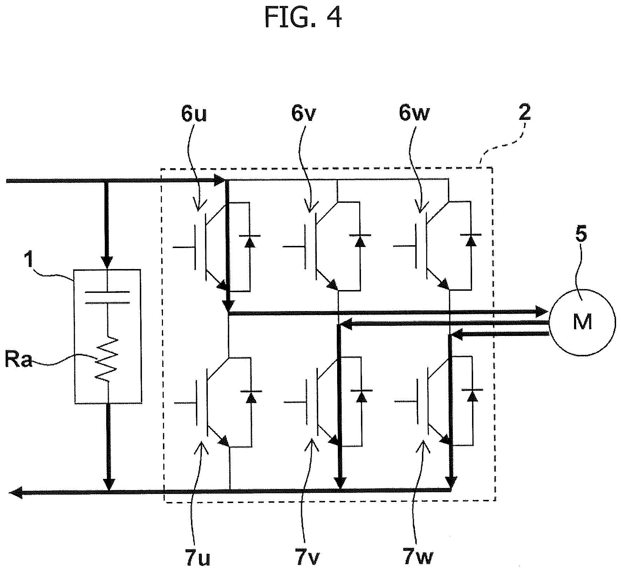

In step S3, the duty cycle of the PWM signal is calculated by the PWM duty cycle calculating unit 10 of the controlling device 3 based on the warm-up mode current value which is set in advance and stored in the memory, and then by the PWM signal with the calculated duty cycle, the upper-phase switching element 6u, for example, of the inverter circuit 2 is driven to be ON while the lower-phase side switching elements 7v, 7w, for example, are driven to be ON. Thus, as indicated by a thick solid line in FIG. 4, the inverter circuit 2 and the motor 5 are supplied with the current which is restricted so that the ripple voltage of the direct voltage falls within the allowable range, to carry out the operation in the warm-up mode. In this case, since the switching elements driven to be ON of the inverter circuit 2 are fixed to the upper-phase side switching element 6u, for example, and the lower-phase side switching elements 7v, 7w, for example, the motor 5 is kept stopping. Thus, the temperature of the electrolytic capacitor 1 is raised by the Joule heat generated in the equivalent series resistance Ra thereof while the motor 5 is supplied with the restricted current. Since the supplied current to the motor 5 is measured by the current measuring unit 8 based on the current passing through the shunt resistor connected to the emitter of the lower-phase side switching elements 7u-7w of the inverter circuit 2, or the shunt resistor disposed on the earth line of the inverter circuit 2, and then the measured current is compared with the above-mentioned warm-up mode current value by the comparator 9, to calculate the duty cycle of the PWM signal by the PWM duty cycle calculating unit 10 so that the difference obtained by the comparison can be corrected, the motor 5 is continuously supplied with the current which is restricted so that the ripple voltage of the direct voltage falls within the allowable range, while the warm-up mode is executed. In this case, the warm-up mode current value may be varied to correlate with the temperature of the electrolytic capacitor 1.

Then, the operation returns to step S2, in which the deciding unit of the controlling device 3 decides again as to whether or not the measure temperature obtained by the temperature measuring device 4 is lower than the target temperature. Thus, until the measured temperature reaches the target temperature in step S2, that is, until it is decides to be NO in step S2, the operation of step S2 and step S3 are repeated.

Then, when the measured temperature reaches the target temperature, and when it is decided to be NO in step S2, the operation proceeds to step S4, in which the plurality of switching elements 6u-6w, 7u-7w of the inverter circuit 2 are sequentially driven to be ON and OFF, to start up the motor 5. As a result, the motor 5 is normally operated.

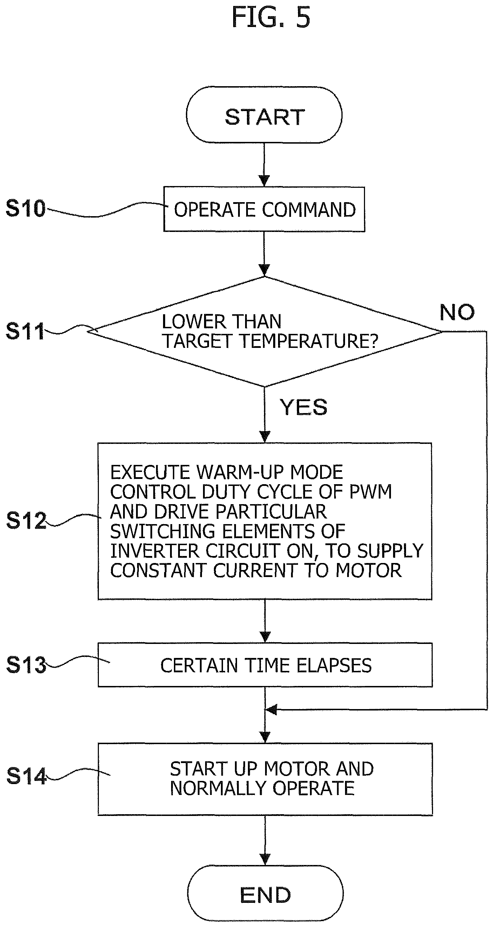

FIG. 5 is a flowchart illustrating another operation of the warm-up mode according to the first embodiment. Hereunder, the operation will be described with reference to FIG. 5.

First, in step S10, when the operation switch is turned on (the operate command), the power source voltage is supplied to the inverter device, to start up the controlling device 3 of the inverter device.

Next, in step S11, the ambient temperature of the electrolytic capacitor 1 is measured by the temperature measuring device 4, and the measured output is sent to the controlling device 3. In the deciding unit of the controlling device 3, the measured temperature obtained by the temperature measuring device 4 is estimated as the temperature of the electrolytic capacitor 1, and compared with the target temperature which is set in advance and stored in the memory for performing the decision as to whether or not operation of warm-up mode is executed. Here, when the measured temperature is lower than the target temperature, it is decided to be YES in step S11, and the operation proceeds to step S12.

In step S12, the duty cycle of the PWM signal is calculated by the PWM duty cycle calculating unit 10 of the controlling device 3 based on the warm-up mode current value which is set in advance and stored in the memory, and then by the PWM signal with the calculated duty cycle, the upper-phase switching element 6u, for example, of the inverter circuit 2 is driven to be ON while the lower-phase side switching elements 7v, 7w, for example, are driven to be ON. Thus, as indicated by the thick solid line in FIG. 4, the inverter circuit 2 and the motor 5 are supplied with the current which is restricted so that the ripple voltage of the direct voltage falls within the allowable range, to carry out the operation in the warm-up mode. In this case, since the switching elements driven to be ON of the inverter circuit 2 are fixed to the upper-phase side switching element 6u, for example, and the lower-phase side switching elements 7v, 7w, for example, the motor 5 is kept stopping. Thus, the temperature of the electrolytic capacitor 1 is raised by the Joule heat generated in the equivalent series resistance Ra thereof while the motor 5 is supplied with the restricted current.

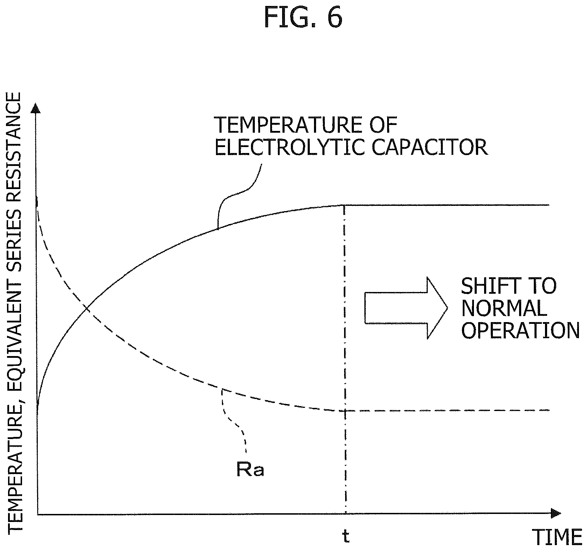

In step S13, an elapsed time is measured by a timer, and when a certain time which is set in advance and stored in the memory elapses, the operation proceeds to step S14. An example of the relationship between the temperature of the electrolytic capacitor 1 and equivalent series resistance Ra, and the energized time are illustrated in FIG. 6. That is, as the energized time elapses, the temperature of the electrolytic capacitor 1 increases and the equivalent series resistance Ra decreases. In addition, it has become clear that both of them become constant values when a time t elapses. Thus, in the example of the control as illustrated in FIG. 5, an elapsed time t, at which the temperature of the electrolytic capacitor 1 and equivalent series resistance Ra become constant after supplying the current of the warm-up mode current value to the motor 5, is obtained in advance by an experiment and the elapsed time t is stored in the memory.

In step S13, when the certain time elapses and when the temperature of the electrolytic capacitor 1 is raised to the target temperature, the operation proceeds to step S14, in which the six switching elements 6u-6w, 7u-7w of the inverter circuit 2 are sequentially driven to be ON and OFF according to predetermined procedures, to start up the motor 5. As a result, the motor 5 is normally operated.

Furthermore, in step S11, when the measured temperature has already reached the target temperature, it is decided to be NO in step S11, and then the operation proceeds to step S14. Also in this case, the six switching elements 6u-6w, 7u-7w of the inverter circuit 2 are sequentially driven to be ON and OFF according to the predetermined procedures, to start up the motor 5, and accordingly, the motor 5 is normally operated.

In the first embodiment, the case in which the current measuring unit 8 measures the current passing through the shunt resistor connected to the emitter of the lower-phase side switching elements 7u-7w of the inverter circuit 2, or the shunt resistor disposed on the earth line of the inverter circuit 2, is described. However, the current measuring unit 8 may measures a current passing through a shunt resistor (not illustrated) connected to the electrolytic capacitor 1 on the negative electrode side thereof, to supply the motor 5 with a current which is restricted so that the ripple voltage of the direct current falls within the allowable range according to the measured current.

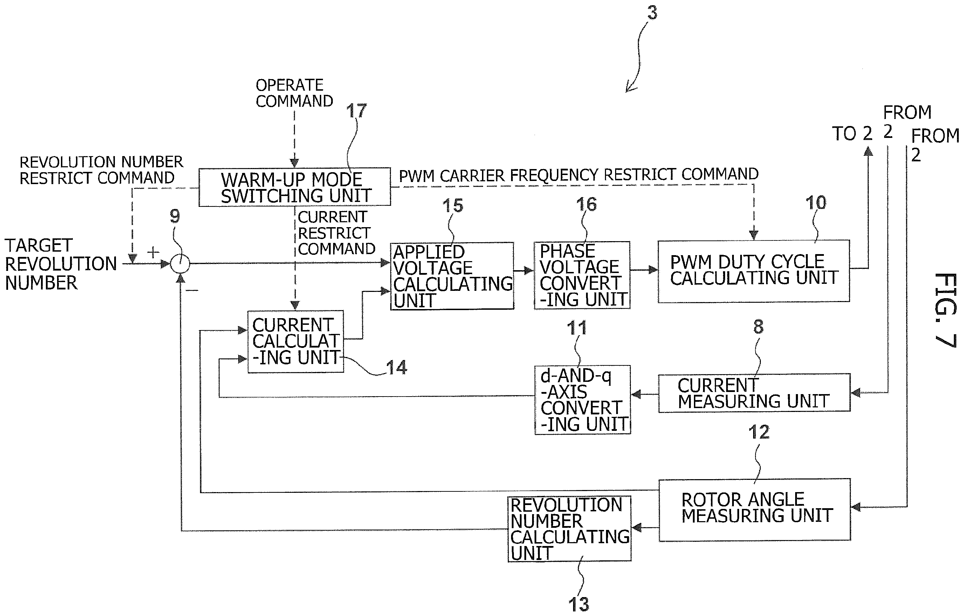

FIG. 7 is a circuit diagram illustrating a schematic constitution of an inverter device according to a second embodiment of the present invention, and also a block diagram illustrating a configuration of the circuit of a controlling device 3. Hereunder, differences from the first embodiment will be described.

A controlling device 3 according to the second embodiment controls an inverter circuit 2 so that a warm-up mode is executed until a certain time elapses after starting up a motor 5, and the controlling device 3 includes a current measuring unit 8, a d-and-q-axis converting unit 11, a rotor angle measuring unit 12, a revolution number calculating unit 13, a current calculating unit 14, a comparator 9, an applied voltage calculating unit 15, a phase voltage converting unit 16, a PWM duty cycle calculating unit 10, and a warm-up mode switching unit 17.

The current measuring unit 8 measures each of three-phase currents Iu, Iv, Iw of the motor 5 based on a current passing through a shunt resistor (not illustrated) connected to an emitter of lower-phase side switching elements 7u-7w of the inverter circuit 2. The d-and-q-axis converting unit 11 converts from the three-phase currents Iu, Iv, Iw to currents Id, Iq of d and q axes. The rotor angle measuring unit 12 measures an angle of a rotor, and for example, obtains the rotor angle by using a Hall sensor or by computing based on a phase voltage and a phase current. The revolution number calculating unit 13 computes based on the measured rotor angle, to calculate the revolution number of the rotor. The current calculating unit 14 calculates a current value based on the currents Id, Iq and the rotor angle, and calculates phase delay or phase advance of the current. The comparator 9 compares the calculated revolution number of the rotor with a target revolution number and outputs a difference obtained by the comparison. The applied voltage calculating unit 15 calculates a voltage for driving the motor 5 and adjusts the phase of the voltage. The phase voltage converting unit 16 converts from voltages Vd, Vq of the d and q axes to three phase voltages Vu, Vv, Vw. The PWM duty cycle calculating unit 10 computes a duty cycle of a PWM signal based on the three-phase voltage Vu, Vv, Vw, and drives each of switching elements 6u-6w, 7u-7w of the inverter circuit 2 to be ON by the PWM signal with the calculated duty cycle. The warm-up mode switching unit 17 compares the temperature received from the temperature measuring device 4 with a target temperature in the warm-up mode when an operation switch is turned on and an operate command is given, and then, when the warm-up mode is necessary, the warm-up mode switching unit 17 selects one of a current restrict command, a revolution number restrict command and a PWM carrier frequency restrict command for the warm-up mode, which commands are capable of restrict the ripple voltage of the direct voltage of the inverter circuit 2 within the allowable range, and then the warm-up mode switching unit 17 outputs the selected command. In this case, when the warm-up mode is executed based on the current restrict command, the current restrict command is output to the current calculating unit 14. Furthermore, when the warm-up mode is carried out based on the revolution number restrict command, the revolution number restrict command is output to a memory. Still further, when the warm-up mode is carried out based on the PWM carrier frequency restrict command, the PWM carrier frequency restrict command is output to the PWM duty cycle calculating unit 10.

Next, operation of the warm-up mode according to the second embodiment having such a configuration will be described.

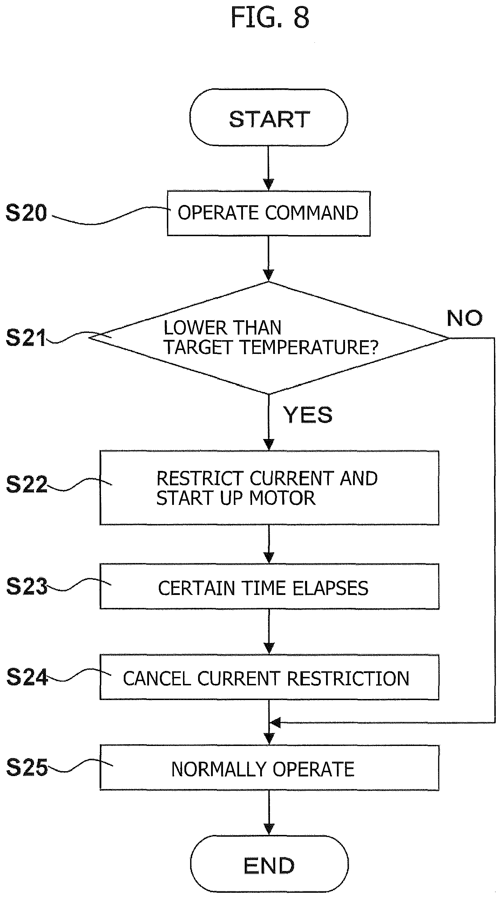

First, a case in which the warm-up mode is executed based on the current restrict command will be described with reference to a flowchart of FIG. 8.

In step S20, when the operation switch is turned on and the operate command is given, the operation proceeds to step S21, in which it is decided as to whether or not the warm-up mode is executed.

In more detail, in step S21, an ambient temperature of the electrolytic capacitor 1 (hereinafter, referred to as "temperature of the electrolytic capacitor 1") received from the temperature measuring device 4 is compared with a target temperature which is set in advance by a deciding unit included in the controlling device 3 and stored in the memory. Then, when the temperature of the electrolytic capacitor 1 is lower than the target temperature, it is decided to be YES in step S21, and then the warm-up mode switching unit 17 is driven to be ON, to select the warm-up mode with current restriction, to thereby output the current restrict command from the warm-up mode switching unit 17 to the current calculating unit 14, and then, the operation proceeds to step S22.

In step S22, based on the current restrict command, the current value calculated by the current calculating unit 14 is restricted to a current value which is set in advance. Here, this restricted current value is a constant set current value which is set in advance and stored in the memory and which is capable of restricting the ripple voltage of the direct voltage, for example, and the restricted current value is a current value which is less than that in the normal operation. Alternatively, the restricted current value may be a current value which is set to be varied to correlate with the temperature of the electrolytic capacitor 1, and the restricted current value may be a current value which is varied based on a table which is generated in advance by an experiment and stored in the memory. Thus, the current value calculated by the current calculating unit 14 based on the currents Id, Iq which are converted from the three-phase currents Iu, Iv, Iw by the d-and-q-axis converting unit 11 by means of d-and-q-axis conversion and based on the rotor angle measured by the rotor angle measuring unit 12, is restricted to the set current value. The current value may be varied by monitoring the temperature of the electrolytic capacitor 1 and the ripple voltage of the direct voltage, without using the table.

In the applied voltage calculating unit 15, an applied voltage for driving the motor 5 is calculated based on the set current value and a rated target revolution number. Furthermore, in the phase voltage converting unit 16, the calculated applied voltage is converted to the three-phase voltages Vu, Vv, Vw, and then the duty cycle of the PWM signal is calculated by the PWM duty cycle calculating unit 10 based on the three-phase voltages Vu, Vv, Vw. Then, each of the switching elements 6u-6w, 7u-7w of the inverter circuit 2 is driven to be ON based on the PWM signal with the calculated duty cycle. Thus, the current which is restricted so that the ripple voltage of the direct voltage falls within the allowable range is supplied to the motor 5, to start up the motor 5. Thereafter, the motor 5 rotates while maintaining the rated revolution number with the restricted current value.

In step S23, an elapsed time after starting up the motor 5 is measured by a timer. Then, when a certain time which is set in advance elapses, the operation proceeds to step S24.

In step S24, the warm-up mode switching unit 17 is driven to be OFF based on an output signal from the timer which indicates that the certain time has elapsed, and then the current restriction performed based on the set current value is cancelled. Thus, the warm-up mode is terminated.

In step S25, applied voltages Vd, Vq applied to the motor 5 is calculated by the applied voltage calculating unit 15 based on: the current value, which is calculated by the current calculating unit 14 based on the currents Id, Iq converted by means of the d-and-q-axis conversion from the three-phase currents Iu, Iv, Iw measured by the current measuring unit 8 based on the current passing through the shunt resistor connected to the emitter of the lower-phase side switching elements 7u-7w of the inverter circuit 2 and based on the rotor angle measured by the rotor angle measuring unit 12; and the difference obtained by comparing the revolution number calculated based on the rotor angle measure by the rotor angle measuring unit 12 with the rated target revolution number by a comparing unit. Furthermore, after converting from the applied voltages Vd, Vq of the d and q axes to the three-phase voltages Vu, Vv, Vw by the phase voltage converting unit 16, and after the duty cycle of the PWM signal is calculated by the PWM duty cycle calculating unit 10 based on the three-phase voltages Vu, Vv, Vw, each of the switching elements 6u-6w, 7u-7w of the inverter circuit 2 is appropriately driven to be ON by the PWM signal with the calculated duty cycle, to normally operate the motor 5.

In step S21, when the temperature of the electrolytic capacitor 1 has already reached the target temperature, it is decided to be NO in step S21, and then the operation proceeds to step S25, in which the motor 5 is normally operated.

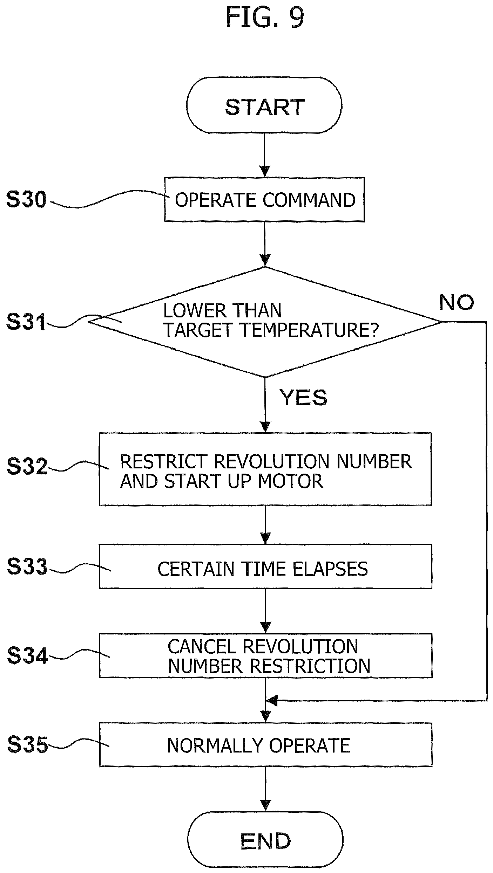

Next, operation of the warm-up mode based on the revolution number restrict command will be described with reference to a flowchart of FIG. 9.

In step S30, when the operation switch is turned on and the operate command is given, the operation proceeds to step S31, in which it is decided as to whether or not the warm-up mode is executed.

In more detail, in step S31, the temperature of the electrolytic capacitor 1 received from the temperature measuring device 4 is compared with the target temperature which is set in advance by a deciding unit included in the controlling device 3 and stored in the memory. Then, when the temperature of the electrolytic capacitor 1 is lower than the target temperature, it is decided to be YES in step S31, and then the warm-up mode switching unit 17 is driven to be ON, to select the warm-up mode with revolution number restriction, to thereby output the revolution number restrict command from the warm-up mode switching unit 17 to the memory, and then, a constant set revolution number (revolution number less than that in the normal operation) which is set in advance and stored in the memory and which is capable of restricting the ripple voltage of the direct voltage within the allowable range, for example, is read from the memory. Then, the operation proceeds to step S32. The set revolution number may be a revolution number which is set to be varied to correlate with the temperature of the electrolytic capacitor 1, and the set revolution number may be a revolution number which is varied based on a table which is generated in advance by an experiment and stored in the memory. In this case, the revolution number may be varied by monitoring the temperature of the electrolytic capacitor 1 and the ripple voltage of the direct voltage, without using the table.

In step S32, according to the revolution number restrict command, the motor 5 is started up based on the constant set revolution number read from the memory, and the motor 5 is operated while the revolution number is restricted to the set revolution number in a state in which the current which is capable of restricting the ripple voltage of the direct voltage within the allowable range is supplied.

Thereafter, the controlling device 3 measures the three-phase currents Iu, Iv, Iw by the current measuring unit 8 based on the current passing through the shunt resistor connected to the emitter of the lower-phase side switching elements 7u-7w of the inverter circuit 2, to obtain the currents Id, Iq by converting the three-phase currents Iu, Iv, Iw by the d-and-q-axis converting unit 11 by means of the d-and-q-axis conversion, so as to calculate the current value, phase delay and phase advance by the current calculating unit 14 based on this currents Id, Iq and the rotor angle measured by the rotor angle measuring unit 12. In addition, an actual rotor revolution number is calculated by the revolution number calculating unit 13 based on the rotor angle measured by the rotor angle measuring unit 12. Then, the revolution number is compared with the set revolution number by a comparing unit and a difference obtained by the comparison is output, and then, the applied voltages Vd, Vq for driving the motor 5 is calculated by the applied voltage calculating unit 15 based on the current value calculated by the current calculating unit 14 and the deviation amount of the revolution number output from the comparing unit. Furthermore, the applied voltages Vd, Vq is converted to the three-phase voltages Vu, Vv, Vw, by the three-phase voltage converting unit 16, and the duty cycle of the PWM signal is calculated by the PWM duty cycle calculating unit 10 based on the three-phase voltages Vu, Vv, Vw, and then, each of the switching elements 6u-6w, 7u-7w of the inverter circuit 2 is driven to be ON by the PWM signal with the duty cycle. Thus, the motor 5 rotates while maintaining the set revolution number. Here, the supplied current to the motor 5 is maintained to be the current value which is capable of restricting the ripple voltage of the direct voltage within the allowable range.

In step S33, an elapsed time after starting up the motor 5 is measured by the timer. Then, when a certain time which is set in advance elapses, the operation proceeds to step S34.

In step S34, the warm-up mode switching unit 17 is driven to be OFF based on the output signal from the timer which indicates that the certain time has elapsed, and then the revolution number restriction performed based on the set revolution number is cancelled. Thus, the warm-up mode is terminated.

In step S35, the target revolution number which is a rated value is read from the memory, and the motor 5 is operated in a state in which the revolution number is restricted to the target revolution number. Thus, the operation of the motor 5 is shifted to the normal operation.

In step S31, when the temperature of the electrolytic capacitor 1 has already reached the target temperature, it is decided to be NO in step S31, and then the operation proceeds to step S35, in which the motor 5 is normally operated.

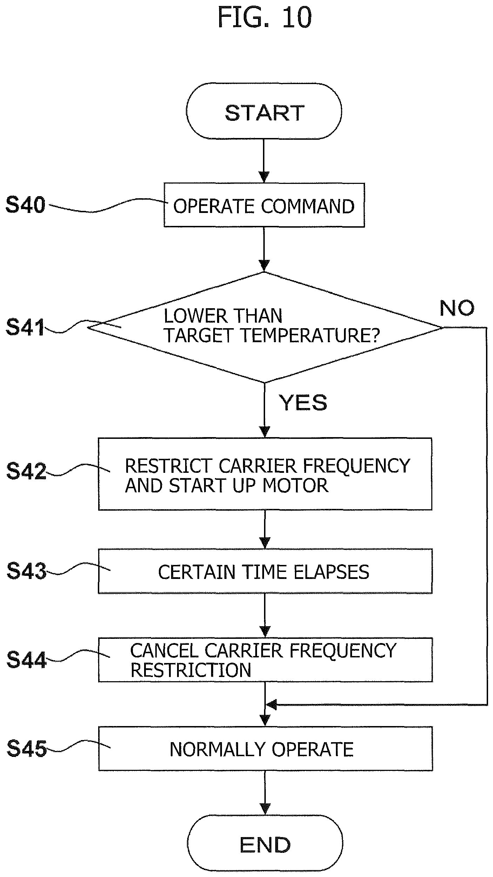

Furthermore, operation of the warm-up mode based on the PWM carrier frequency restrict command will be described with reference to a flowchart of FIG. 10.

In step S40, when the operation switch is turned on and the operate command is given, the operation proceeds to step S41, in which it is decided as to whether or not the warm-up mode is executed.

In more detail, in step S41, the temperature of the electrolytic capacitor 1 received from the temperature measuring device 4 is compared with the target temperature which is set in advance by a deciding unit included in the controlling device 3 and stored in the memory. Then, when the temperature of the electrolytic capacitor 1 is lower than the target temperature, it is decided to be YES in step S41, and then the warm-up mode switching unit 17 is driven to be ON, to select the warm-up mode with PWM carrier frequency restriction, and the operation is proceeds to step S42.

In step S42, the PWM carrier frequency restrict command is output from the warm-up mode switching unit 17 to the PWM duty cycle calculating unit 10, and then a carrier frequency is set to, for example, a constant PWM carrier frequency (carrier frequency less than that in the normal operation) which is capable of restricting the ripple voltage of the direct voltage within the allowable range. Then, the PWM signal is generated based on the set carrier frequency set by the PWM duty cycle calculating unit 10, and a duty cycle of the generated PWM signal is calculated based on the rated target revolution number, and then, each of the switching elements 6u-6w, 7u-7w of the inverter circuit 2 is driven to be ON by the PWM signal with the calculated duty cycle, so as to start up the motor 5. The set carrier frequency may be a carrier frequency which varies to correlate with the temperature of the electrolytic capacitor 1, and the set carrier frequency may be a carrier frequency which is varied based on a table which is generated in advance by an experiment and stored in the memory. Thus, the motor 5 is operated while the carrier frequency is restricted (decreased) to the set carrier frequency in a state in which the current which is capable of restricting the ripple voltage of the direct voltage within the allowable range. The carrier frequency may be varied by monitoring the temperature of the electrolytic capacitor 1 and the ripple voltage of the direct voltage, without using the table.

Thereafter, the controlling device 3 calculates the duty cycle of the PWM signal generated by the set carrier frequency based on the measured three-phase currents Iu, Iv, Iw and the rotor angle, and the target revolution number, to drive each of switching elements 6u-6w, 7u-7w of the inverter circuit 2 to be ON by the PWM signal with the calculated duty cycle. Thus, the motor 5 is operated while maintaining the target revolution number. At this time, the supplied voltage to the motor 5 is maintained to the current value which is capable of restricting the ripple voltage of the direct voltage within the allowable range.

In step S43, an elapsed time after starting up the motor 5 is measured by the timer. Then, when a certain time which is set in advance elapses, the operation proceeds to step S44.

In step S44, the warm-up mode switching unit 17 is driven to be OFF based on the output signal from the timer which indicates that the certain time has elapsed, and then the carrier frequency restriction (decrease) performed based on the set carrier frequency is cancelled. Thus, the warm-up mode is terminated.

In step S45, the motor 5 is operated in a state the motor 5 is controlled according to the carrier frequency in the normal operation, and thus, the operation of the motor 5 is shifted to the normal operation.

In step S41, when the temperature of the electrolytic capacitor 1 has already reached the target temperature, it is decided to be NO in step S41, and then the operation proceeds to step 45, in which the motor 5 is normally operated.

In the second embodiment, the case in which the operation of the warm-up mode is executed by independently restricting each of the current, the revolution number, and the carrier frequency, is described. However, the present invention is not limited to this. The restrictions of the current, the revolution number, and the carrier frequency may be appropriately combined. For example, at least two of the current restriction, the revolution number restriction, and the carrier frequency restriction may be selected, to execute the warm-up mode with each of the selected restrictions for a certain time. Furthermore, when a function having only a warm-up mode with the current restriction, the revolution number restriction, or the carrier frequency restriction is provided, the warm-up mode switching unit 17 may be omitted.

Furthermore, in the first and second embodiments, the case in which the supplied current to the motor 5 is restricted based on the current passing through the shunt resistor connected to the emitter of the lower-phase side switching elements 7u-7w of the inverter circuit 2, the current passing through the shunt resistor disposed on the earth line of the inverter circuit 2, or the current passing through the shunt resistor connected to the electrolytic capacitor 1 on the negative electrode side thereof, is described. However, the present invention is not limited to this. A ripple current may be estimated based on the current (measured current) passing through the shunt resistor connected to the emitter of the lower-phase side switching elements 7u-7w or the shunt resistor disposed on the earth line of the inverter circuit 2, to restrict the supplied voltage to the motor 5 so that the ripple current falls within the allowable range. In this case, the ripple current can be estimated by the sum of alternating current components of the measured current. Alternatively, the relationship between the measured current and the ripple current may be determined in advance by an experiment, to estimate the ripple current based on this relationship.

Although in the above description, the three-phase inverter circuit 2 is described. However, the present invention is not limited to this. The inverter circuit 2 may has any numbers of phases, such as four phases, or the like, and the number of phases may be appropriately selected according to the number of phases of the electric motor in which the inverter circuit 2 is applied.

### REFERENCE SIGNS LIST

- 1: Electrolytic capacitor
- 2: inverter circuit
- 3: controlling device
- 4: temperature measuring device
- 5: Motor (electric motor)
- 6u-6w, 7u-7w: Switching elements
- Ra: Equivalent series resistance

## Claims

1. An inverter device comprising:
an electrolytic capacitor (1) that smoothes a rectified voltage to a direct voltage;
an inverter circuit (2) that generates an alternating voltage from the direct voltage, to drive an electric motor (5) ;
a controlling device (3) that controls drive of a plurality of switching elements (6u-6w, 7u-7w) included in the inverter circuit (2); and
a temperature measuring device (4) that measures a temperature of the electrolytic capacitor (1), to output the measured temperature to the controlling device (3), **characterized in that**,
when the temperature obtained by the temperature measuring device (4) is lower than a predetermined target temperature, the controlling device (3) supplies the electric motor (5) with a current which is restricted so that a ripple voltage generated when the rectified voltage is smoothened to the direct voltage falls within an allowable range, before starting a normal operation of the electric motor (5), so that the temperature of the electrolytic capacitor (1) is raised to the target temperature.

2. The inverter device according to claim 1, wherein, before starting up the electric motor (5), the controlling device (3) selects particular switching elements (6u-6w, 7u-7w) from the plurality of switching elements (6u-6w, 7u-7w) of the inverter circuit (2), to drive the particular switching element to be ON, to thereby enable the electric motor (5) to be supplied with the current, while the controlling device (3) controls the current supplied to the electric motor (5) based on a set current value which is capable of suppressing the ripple voltage of the direct voltage within the allowable range.

3. The inverter device according to claim 1, wherein until a certain time elapses after starting up the electric motor (5), the controlling device (3) controls the current supplied to the electric motor (5) based on a constant set current value which is capable of restricting the ripple voltage of the direct voltage within the allowable range or a variable set current value which varies to correlate with the temperature of the electrolytic capacitor (1).

4. The inverter device according to claim 1, wherein until a certain time elapses after starting up the electric motor (5), the controlling device (3) controls the current supplied to the electric motor (5) based on a constant set revolution number which is capable of restricting the ripple voltage of the direct voltage within the allowable range or a variable set revolution number which varies to correlate with the temperature of the electrolytic capacitor (1).

5. The inverter device according to claim 1, wherein until a certain time elapses after starting up the electric motor (5), the controlling device (3) controls the current supplied to the electric motor (5) based on a constant pulse width modulation carrier frequency which is capable of restricting the ripple voltage of the direct voltage within the allowable range or a variable pulse width modulation carrier frequency which varies to correlate with the temperature of the electrolytic capacitor (1).

## Patentansprüche

1. Wechselrichtervorrichtung mit:
einem Elektrolytkondensator (1), der eine gleichgerichtete Spannung zu einer Gleichspannung glättet;
einer Wechselrichterschaltung (2), die aus der Gleichspannung eine Wechselspannung erzeugt, um einen Elektromotor (5) anzutreiben;
einer Steuervorrichtung (3), die einen Antrieb von vielen Schaltelementen (6u-6w, 7u-7w) steuert, die in der Wechselrichterschaltung (2) enthalten sind; und
einer Temperaturmessvorrichtung (4), die eine Temperatur des Elektrolytkondensators (1) misst, um die gemessene Temperatur zu der Steuervorrichtung (3) abzugeben, **dadurch gekennzeichnet, dass**,
wenn die durch die Temperaturmessvorrichtung (4) erhaltene Temperatur kleiner ist als eine vorbestimmte Solltemperatur, die Steuervorrichtung (3) den Elektromotor (5) mit einem Strom versorgt, der so begrenzt ist, dass eine überlagerte Wechselspannung, die erzeugt wird, wenn die gleichgerichtete Spannung zu der Gleichspannung geglättet wird, innerhalb eines zulässigen Bereichs fällt, bevor ein normaler Betrieb des Elektromotors (5) gestartet wird, so dass die Temperatur des Elektrolytkondensators (1) auf die Solltemperatur angehoben wird.

2. Wechselrichtervorrichtung gemäß Anspruch 1, wobei vor dem Start des Elektromotors (5) die Steuervorrichtung (3) bestimmte Schaltelemente (6u-6w, 7u-7w) aus den vielen Schaltelementen (6u-6w, 7u-7w) der Wechselrichterschaltung (2) auswählt, um die bestimmten Schaltelemente einzuschalten, wodurch ermöglicht wird, dass der Elektromotor (5) mit dem Strom versorgt wird, während die Steuervorrichtung (3) den Strom, der dem Elektromotor (5) zugeführt wird, auf der Grundlage einer festgelegten Stromstärke steuert, die in der Lage ist, die überlagerte Wechselspannung der Gleichspannung innerhalb des zulässigen Bereichs zu unterdrücken.

3. Wechselrichtervorrichtung gemäß Anspruch 1, wobei bis zum Verstreichen einer bestimmten Zeit nach dem Start des Elektromotors (5) die Steuervorrichtung (3) den Strom, der dem Elektromotor (5) zugeführt wird, auf der Grundlage einer konstant festgelegten Stromstärke steuert, die in der Lage ist, die überlagerte Wechselspannung der Gleichspannung innerhalb des zulässigen Bereichs zu begrenzen, oder einer variabel festgelegten Stromstärke, die sich so ändert, dass sie mit der Temperatur des Elektrolytkondensators (1) korreliert.

4. Wechselrichtervorrichtung gemäß Anspruch 1, wobei bis zum Verstreichen einer bestimmten Zeit nach dem Start des Elektromotors (5) die Steuervorrichtung (3) den Strom, der dem Elektromotor (5) zugeführt wird, auf der Grundlage einer konstant festgelegten Drehzahl steuert, die in der Lage ist, die überlagerte Wechselspannung der Gleichspannung innerhalb des zulässigen Bereiches zu begrenzen, oder einer variabel festgelegten Drehzahl, die sich so ändert, dass sie mit der Temperatur des Elektrolytkondensators (1) korreliert.

5. Wechselrichtervorrichtung gemäß Anspruch 1, wobei bis zum Verstreichen einer bestimmten Zeit nach dem Start des Elektromotors (5) die Steuervorrichtung (3) den Strom, der dem Elektromotor (5) zugeführt wird, auf der Grundlage einer konstanten Pulsbreitenmodulationsträgerfrequenz steuert, die in der Lage ist, die überlagerte Wechselspannung der Gleichspannung innerhalb des zulässigen Bereichs zu begrenzen, oder einer variablen Pulsbreitenmodulationsträgerfrequenz, die sich so ändert, dass sie mit der Temperatur des Elektrolytkondensators (1) korreliert.

## Revendications

1. Dispositif onduleur comprenant :
un condensateur électrolytique (1) qui lisse une tension rétractée pour permettre d'obtenir une tension continue,
un circuit onduleur (2) qui génère une tension alternative à partir de la tension continue pour permettre d'entraîner un moteur électrique (5),
un dispositif de commande (3) qui commande l'entraînement d'un ensemble d'éléments de commutation (6u-6w, 7u-7w) montés dans le circuit onduleur (2), et
un dispositif de mesure de température (4) qui mesure la température du condensateur électrolytique (1) pour fournir en sortie la température mesurée au dispositif de commande (3),
**caractérisé en ce que**
lorsque la température obtenue par le dispositif de mesure de la température (4) est inférieure à une température-cible prédéfinie, le dispositif de commande (3) fournit au moteur électrique (5) un courant qui est limité de sorte que la tension d'ondulation générée lorsque la tension redressée est lissée pour obtenir la tension continue tombe dans une plage admissible avant le démarrage du fonctionnement normal du moteur électrique (5) de sorte que la température du condensateur électrolytique (1) relevée à la température cible.

2. Dispositif onduleur conforme à la revendication 1,
dans lequel, avant le démarrage du moteur électrique (5), le dispositif de commande (3) sélectionne des éléments de commutation (6u, 6w, 7u-7w) particuliers parmi l'ensemble d'éléments de commutation (6u, 6w, 7u-7w) du circuit onduleur (2) pour positionner ces éléments de commutation particuliers en position ON, de façon à permettre l'alimentation en courant du moteur électrique (5) tandis que le dispositif de commande (3) commande le courant fourni au moteur électrique (5) à partir d'une valeur de courant réglée qui permet de supprimer la tension d'ondulation de la tension continue de sorte qu'elle soit située dans la plage admissible.

3. Dispositif onduleur conforme à la revendication 1,
dans lequel jusqu'à ce qu'une certaine durée se soit écoulée après le démarrage du moteur électrique (5), le dispositif de commande (3) commande le courant fourni au moteur électrique (5) sur la base d'une valeur de courant réglée constante qui permet de limiter la tension d'ondulation de la tension continue de sorte qu'elle soit située dans la plage admissible ou d'une valeur de courant réglée variable qui varie pour permettre une corrélation avec la température du condensateur électrolytique (1).

4. Dispositif onduleur conforme à la revendication 1,
dans lequel jusqu'à ce qu'une certaine durée se soit écoulée après le démarrage du moteur électrique (5) le dispositif de commande (3) commande le courant fourni au moteur électrique (5) sur la base d'une vitesse de rotation réglée constante qui permet de limiter la tension d'ondulation de la tension continue de sorte qu'elle soit située dans la plage admissible ou d'une vitesse de rotation réglée variable qui varie pour permettre une corrélation avec la température du condensateur électrolytique (1).

5. Dispositif onduleur conforme à la revendication 1,
dans lequel jusqu'à ce qu'une certaine durée se soit écoulée après le démarrage du moteur électrique (5), le dispositif de commande (3) commande le courant fourni au moteur électrique (5) sur la base d'une fréquence de porteuse modulée ayant une largeur d'impulsion constante qui permet de limiter la tension d'ondulation de la tension continue de sorte qu'elle soit située dans la plage admissible ou d'une fréquence de porteuse modulée ayant une largeur d'impulsion variable qui varie pour permettre une corrélation avec la température du condensateur électrolytique (1).
